# EUROPEAN PATENT SPECIFICATION

(11) **EP 3 163 121 B1**
(45) Date of publication and mention of the grant of the patent: **22.08.2018**
(21) Application number: 16190889.2
(22) Date of filing: 27.09.2016
(51) Int. Cl.: F16H 21/12

(54) **MULTI-LINK ROTATION STRUCTURE**
ROTATIONSSTRUKTUR MIT MEHRFACHVERBINDUNG
STRUCTURE TOURNANTE À LIAISONS MULTIPLES

(30) Priority: 27.10.2015 TW 104135370
(43) Date of publication of application: 03.05.2017
(73) Proprietor: Huang, Ming-Shih, Yunlin County 652 (TW)
(72) Inventor: Huang, Ming-Shih, Yunlin County 652 (TW)
(74) Representative: Lang, Christian

(56) References cited:
- GB-A- 2 024 980
- US-A- 4 567 782

## Description

### BACKGROUND OF THE INVENTION

### Field of the Invention

The present invention relates to a multi-link rotation structure.

### Description of the Prior Art

Many devices and machines are equipped with connectors and transmission mechanisms such as gears, chains or multi-link mechanisms. Through the gears, chains or multi-link mechanisms, the devices and machines such as engines, motors, blowers or the like can output power for external uses (such as driving of actuators, wheels or generators), and thus it is very important in many fields.

However, the aforementioned conventional connector or transmission mechanism is connected between a driving device and a driven device, and is merely a mediate power transmission mechanism. The arrangement of the aforementioned conventional connector or transmission mechanism is generally restricted by installation space for the driving device and driven device and/or motion conditions (such as rotation speed or stroke). How to reduce energy loss of using the aforementioned conventional connector or transmission mechanism and how to ensure efficient operation and efficiently output power have been long-termed unsolved problems.

From document GB 2024980 A a mechanism for converting rotary motion into cyclically variable rotary motion or vice versa is known that comprises the features of the preamble of claim 1. However, the arms of one of the arm assemblies have an angle of less than 180 degrees between them, whereas the arms of the other arm assembly extend in opposite directions and have thus an angle of exactly 180 degrees between them. Accordingly, the structure of the mechanism is asymmetrical resulting in a larger likelihood of deformation of the straight arm assembly. Further, no provision is made for restricting the rotation direction of the mechanism. The present invention has arisen to mitigate and/or obviate the afore-described disadvantages.

### SUMMARY OF THE INVENTION

The major object of the present invention is to provide a multi-link rotation structure, using a multi-link mechanism and unidirectional rotation devices are used to achieve unidirectional rotation to provide output power; being simple in structure, easy to assemble, of low cost, and suitable for installation in many places.

To achieve the above and other objects, a multi-link rotation structure is provided having the features of claim 1. Further embodiments are subject-matter of the dependent claims. The multi-link rotation structure according to the invention includes: a base; two arm assemblies, each of the two arm assemblies including an axle rotatably mounted to the base and at least two arms connected with the axle and extending away from each other, the axles of the two arm assemblies being non-coaxial; at least two unidirectional rotation devices having each an axle of rotation, wherein one of the at least two unidirectional rotation devices is rotatably mounted with its axle to one of the at least two arms of one of the two arm assemblies and the other of the two unidirectional rotation devices is rotatably mounted with its axle to the other arm of the same arm assembly; at least two linkage assemblies, wherein one of the at least two linkage assemblies is rotatably mounted to one of the at least two arms of one of the two arm assemblies and rotatably mounted to one of the at least two unidirectional rotation devices, and wherein the other of the at least two linkage assemblies is rotatably mounted two the other arm of the same arm assembly and rotatably mounted to the other of the at least two unidirectional rotation devices.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a preferred embodiment of the present invention;
Fig. 2 is a breakdown view of the preferred embodiment of the present invention;
Fig. 3 is a front view of the preferred embodiment of the present invention;
Figs. 4-7 show various preferred embodiments of the present invention; and
Fig. 8 is a stereogram of another preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

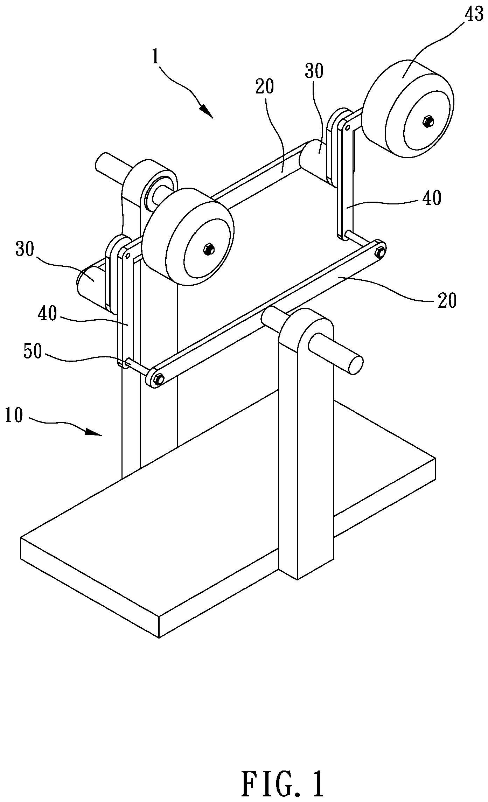

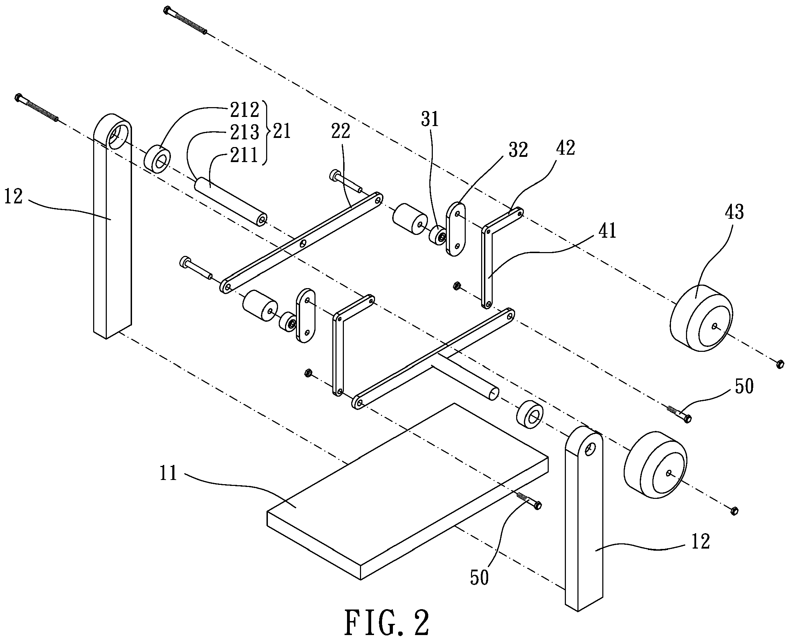

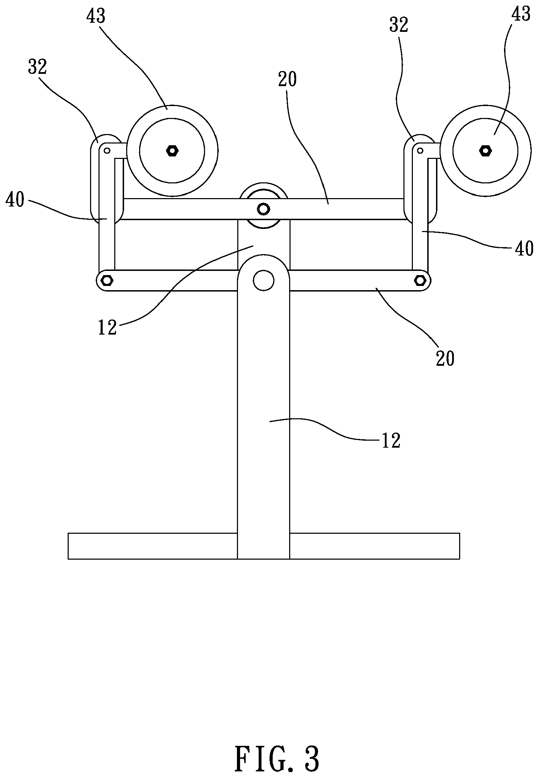

Please refer to Figs. 1 to 3 for a preferred embodiment of the present invention. A multi-link rotation structure 1 includes a base 10, two arm assemblies 20, at least two unidirectional rotation devices 30 and at least two linkage assemblies 40.

Each of the two arm assemblies 20 includes an axle 21 rotatably mounted to the base 10 and at least two arms 22 connected with the axle 21 and extending away from each other (preferably oppositely extending from the axles 21). The axles 21 of the two arm assemblies 20 are non-coaxial. The at least two unidirectional rotation devices 30 are respectively rotatably mounted with their axle of rotation to one of the at least two arms 22 of one of the two arm assemblies 20 and rotatable in a same direction. Each of the at least two linkage assemblies 40 is rotatably mounted to one of the at least two arms 22 of the other of the two arm assemblies 20 and rotatably mounted to one of the at least two unidirectional rotation devices 30. Thereby, as at least one of the arms 22 receives a force (such as hand loading, mechanical force input, additional weight, magnetic force, fluid (such as air or water) force), the multi-link rotation structure 1 can be rotated to generate torque and output power. Additionally, the axles 21 may cooperate with a reduction mechanism and an unidirectional bearing to apply required force to the arms 22, so that it requires less force to overcome inertia of the multi-link rotation structure, and the two arm assemblies 20 are rotated. The unidirectional bearing reduces friction of parts, thus improving the output power.

Specifically, the base 10 includes a base member 11 and two posts 12 spaced apart from each other and disposed on the base member 11. The two posts 12 are preferably arranged to be axially aligned with each other, but not limited thereto. Each of the axles 21 of the two arm assemblies 20 is rotatably mounted to one said post 12. Preferably, the axles 21 of the two arm assemblies 20 are arranged in a high-low manner. However, the axles 21 of the two arm assemblies 20 may be rotatably mounted to the post as long as the two arm assemblies 20 will not be stuck with each other. Each of the axles 21 of the two arm assemblies 20 includes an axle part 211 and a bearing 212 disposed around the axle part 211, and the bearing 212 is attached to one of the two posts 12, and thus the bearing 212 can minimize rotational friction of the axle part 211. In this embodiment, each of the two arm assemblies 20 includes two of the arms 22, the two arms 22 extend oppositely at an angle of 180 degrees, and the two arm assemblies 20 are parallel to each other. Preferably, each of the axles 21 further include a power-output connection mechanism 213, and the power-output connection mechanism 213 may be spline teeth, socket, gear, connection rod, coupling or the like. The power-output connection mechanism 213 is for external connection of a driven device (such as a generator, wheel or any rotatable mechanism), for driving the driven device.

Each of the at least two unidirectional rotation devices 30 includes an unidirectional bearing 31 and is rotatably mounted with its axle of rotation to one said arm 22 of one of the two arm assemblies 20 and a connecting member 32 which is rotatably mounted to the unidirectional bearing 31 and one of the at least two linkage assemblies 40, and the unidirectional bearing 31 and a portion of the arm 22 rotatably mounted with the linkage assembly 40 are non-coaxial. The axes of the at least two unidirectional bearings 31 are substantially parallel. The at least two unidirectional rotation devices 30 may be ratchets or/and ratcheting members. It is noted that the at least two unidirectional rotation devices 30 may be connected directly to the unidirectional bearing of one said arm 22 without any connecting member.

Each of the at least two linkage assemblies 40 includes a linking section 41 which is rotatably mounted to one said arm 22 of one of the two arm assemblies 20 and rotatably mounted to one of the at least two unidirectional rotation devices 30 and includes an extending section 42 transversely extending from the linking section 41, and the extending sections 42 of the two linkage assemblies 40 extend substantially toward a same direction. The arms 22 of the two arm assemblies 20 and the linking sections 41 of the at least two linkage assemblies 40 form a four-bar mechanism. In this embodiment, each of the at least two linkage assemblies 40 further includes a weight 43. Preferably, each weight 43 is attached to the extending section 42, and the weights 43 of the at least two linkage assemblies 40 shift toward a same direction relative to respective portions of the at least two linkage assemblies 40 rotatably mounted to the at least two unidirectional rotation devices 30. As a result, when a force or loading exerts on the multi-link rotation structure 1, the weight 43 can advantage the rotational inertia and torque of the multi-link rotation structure 1. It is noted that the greater the length of the extending section 42 is, the rotational inertia and torque of the multi-link rotation structure 1 are (even none of weight is required). The weight 43 may be a ball member such as a solid ball or a hollow ball with filler thereinside, but not limited thereto.

Specifically, the two unidirectional rotation devices 30 axially separate the two arm assemblies 20. Each of the at least two linkage assemblies 40 is connected between one said unidirectional rotation device 30 and one said arm assembly 20 using a shaft member 50. As a result, the at least two linkage assemblies 40 and the two weights 43 can move continuously between the two arm assemblies 20, without any interference. With restriction of the unidirectional rotation devices 30, the multi-link rotation structure 1 can rotate in one way.

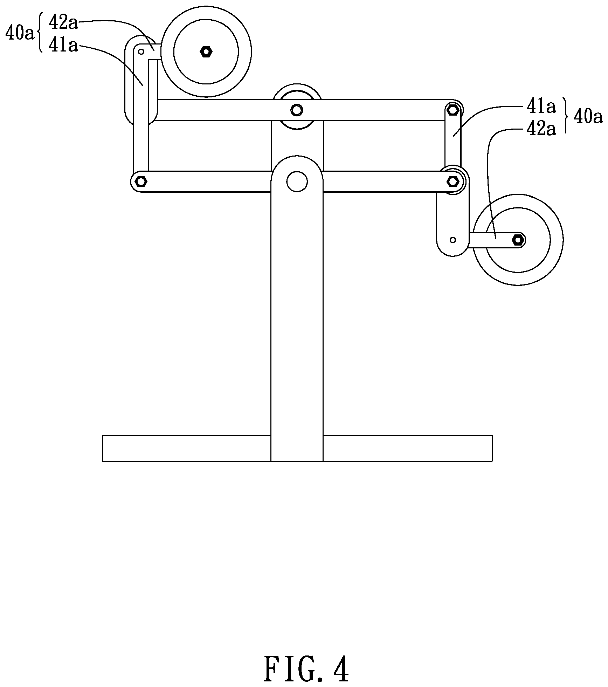

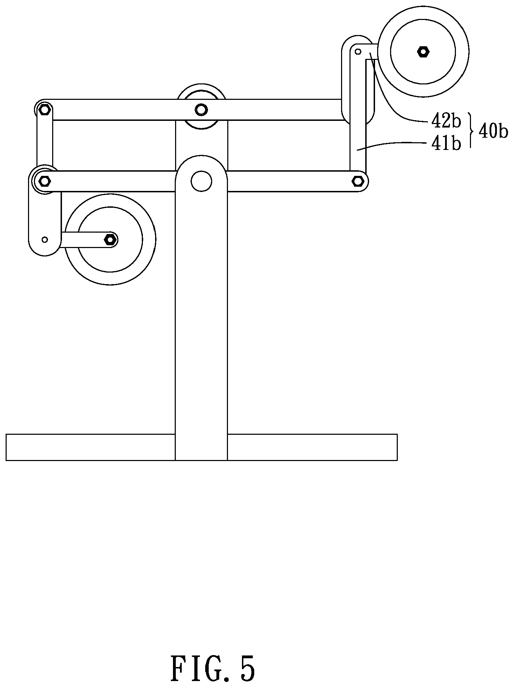

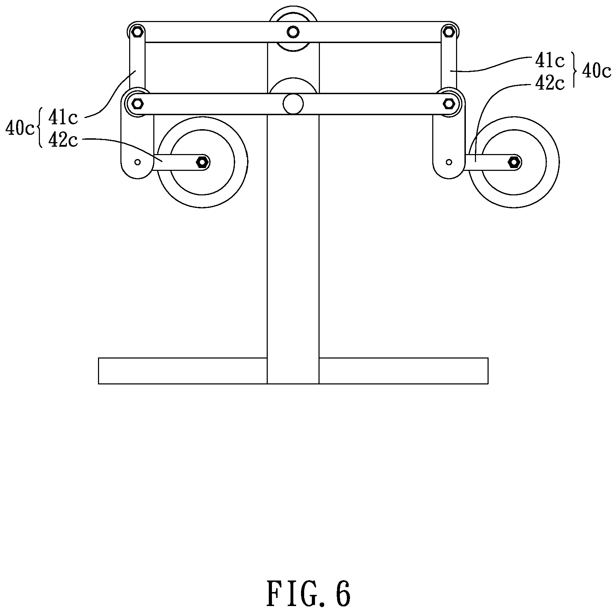

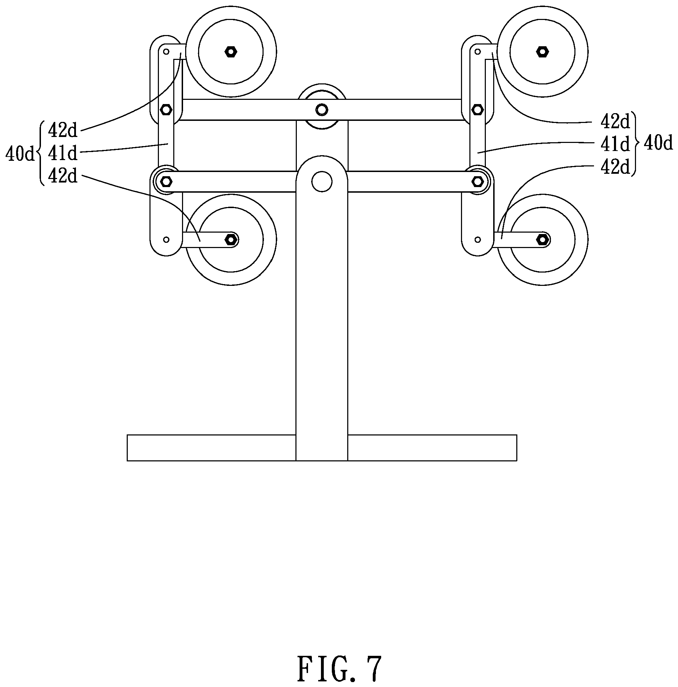

A multi-link rotation structure according to various embodiments of the present invent, two extending sections 42a of two linkage assemblies 40a are located at upper left and lower right sides of two linking sections 41a, respectively (as shown in Fig. 4); two extending sections 42b of two linkage assemblies 40b are located at lower left and upper right sides of two linking sections 41b, respectively (as shown in Fig. 5); two extending sections 42c of two linkage assemblies 40c are located at bottom side of two linking sections 41c (as shown in Fig. 6); each of two linking sections 41d of two linkage assemblies 40d has two extending section 42d extending from upper and lower ends thereof, respectively (as shown in Fig. 7). It is noted that it requires that there is at least one couple of extending sections or that the extending sections are located at the same side.

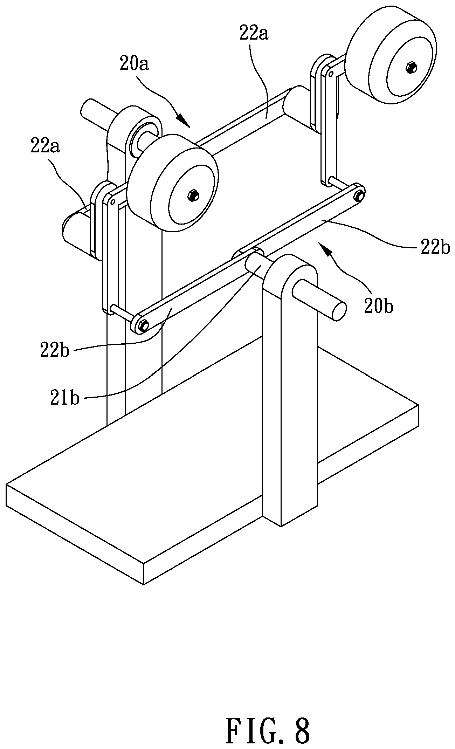

In an alternative embodiment as shown in Fig. 8, two arms 22a of an arm assembly 20a are integrally connected together (for example, formed in one piece), two arms 22b of another arm assembly 20b are not formed in one piece and respectively rotatably mounted to two axles 21b. The two arms 22b of the arm assembly 20b rotatably mounted to the axle 21b have a total length equal to a length of the two arms 22a of the two arm assemblies 20a. The two arms 22b have respective contacts and frictions with the axle 21b, and the respective contacts and frictions do not affect each other, so forces on rotational mechanisms on two sides of the two arm assemblies 20a cannot impede each other, thus having good operation efficiency.

It is noted that, the multi-link rotation structure may include three or more arm assemblies, three or more unidirectional rotation devices and three or more linkage assemblies.

Given the above, the multi-link rotation structure uses a multi-link mechanism and unidirectional rotation devices to achieve unidirectional rotation, preferably with weights to increase rotational inertia, to provide output power.

In addition, the multi-link rotation structure is simple in structure, easy to assemble, of low cost, and suitable for installation in many places.

While we have shown and described various embodiments in accordance with the present invention, it should be clear to those skilled in the art that further embodiments may be made without departing from the scope of the present invention as defined in the appended claims.

## Claims

1. A multi-link rotation structure (1), including:
a base (10);
a first and a second arm assembly (20, 20a, 20b),
each of the two arm assemblies (20, 20a, 20b) including an axle (21, 21b) rotatably mounted to the base (10) and at least two arms (22, 22a, 22b) connected with the axle (21, 21b) and extending away from each other, the axles (21, 21b) of the two arm assemblies (20, 20a, 20b) being non-coaxial;
**characterised in that**
the multi-link rotation structure (1) further includes at least two unidirectional rotation devices (30) rotatable in the same direction and having each an axle of rotation,
wherein one of the at least two unidirectional rotation devices (30) is rotatably mounted with its axle to one of the at least two arms (22, 22a, 22b) of the first arm assembly (20, 20a, 20b) and the other of the two unidirectional rotation devices (30) is rotatably mounted with its axle to the other arm (22, 22a, 22b) of the first arm assembly (20, 20a, 20b);
at least two linkage assemblies (40, 40a, 40b, 40c, 40d), wherein one of the at least two linkage assemblies (40, 40a, 40b, 40c, 40d) is rotatably mounted to one of the at least two arms (22, 22a, 22b) of the second arm assemblies (20, 20a, 20b) and rotatably mounted to one of the at least two unidirectional rotation devices (30), and wherein the other of the at least two linkage assemblies (40, 40a, 40b, 40c, 40d) is rotatably mounted two the other arm (22, 22a, 22b) of the second arm assembly (20, 20a, 20b) and rotatably mounted to the other of the at least two unidirectional rotation devices (30).

2. The multi-link rotation structure of claim 1, wherein the base (10) includes two posts (12) spaced apart from each other, and each of the axles (21, 21b) of the two arm assemblies (20, 20a, 20b) is rotatably mounted to one of the two posts (12).

3. The multi-link rotation structure of claim 2, wherein the axles (21, 21b) of the two arm assemblies (20, 20a, 20b) are arranged in a high-low manner.

4. The multi-link rotation structure of claim 2, wherein each of the axles (21, 21b) of the two arm assemblies (20, 20a, 20b) includes an axle part (211) and a bearing (212) disposed around the axle part (211), and the bearing (212) is attached to one of the two posts (12).

5. The multi-link rotation structure of claim 1, wherein each of the two arm assemblies (20, 20a, 20b) includes two of the arms (22, 22a, 22b) extending oppositely at an angle of 180 degrees, and the two arm assemblies (20, 20a, 20b) are parallel to each other.

6. The multi-link rotation structure of claim 1, wherein each of the at least two unidirectional rotation devices (30) includes an unidirectional bearing (31) which is rotatably mounted to one said arm (22, 22a, 22b) of the first arm assembly (20, 20a, 20b) and a connecting member (32) which is rotatably mounted to the unidirectional bearing (31) and one of the at least two linkage assemblies (40, 40a, 40b, 40c, 40d), and the unidirectional bearing (31) and a portion of the arm (22, 22a, 22b) rotatably mounted with the linkage assembly (40, 40a, 40b, 40c, 40d) are non-coaxial.

7. The multi-link rotation structure of claim 1, wherein each of the axles (21, 21b) of the two arm assemblies (20, 20a, 20b) includes a power-output connection mechanism (213), and the power-output connection mechanism (213) is for external connection of a driven device.

8. The multi-link rotation structure of claim 1, wherein the at least two arms (22, 22a, 22b) of the first arm assembly (20, 20a, 20b) are integrally connected together, and the at least two arms (22, 22a, 22b) of the second arm assembly (20, 20a, 20b) are not integrally connected together and respectively rotatably mounted to the axle (21, 21b) of the second arm assembly (20, 20a, 20b).

9. The multi-link rotation structure of claim 1, wherein each of the at least two linkage assemblies (40, 40a, 40b, 40c, 40d) includes a linking section (41, 41a, 41b, 41c, 41d) which is rotatably mounted to one said arm (22, 22a, 22b) of one of the two arm assemblies (20, 20a, 20b) and rotatably mounted to one of the at least two unidirectional rotation devices (30) and includes an extending section (42, 42a, 42b, 42c, 42d) extending laterally from the linking section (41, 41a, 41b, 41c, 41d), and the extending sections (42, 42a, 42b, 42c, 42d) of the two arm assemblies (42, 42a, 42b, 42c, 42d) extend substantially toward a same direction.

10. The multi-link rotation structure of claim 1, wherein each of the at least two linkage assemblies (40, 40a, 40b, 40c, 40d) further includes a weight (43), and the weights of the at least two linkage assemblies (40, 40a, 40b, 40c, 40d) shift toward a same direction relative to respective portions of the at least two linkage assemblies (40, 40a, 40b, 40c, 40d) rotatably mounted to the at least two unidirectional rotation devices (30).

11. The multi-link rotation structure of claim 3, wherein each of the at least two linkage assemblies (40, 40a, 40b, 40c, 40d) further includes a weight (43), and the weights of the at least two linkage assemblies (40, 40a, 40b, 40c, 40d) shift toward a same direction relative to respective portions of the at least two linkage assemblies (40, 40a, 40b, 40c, 40d) rotatably mounted to the at least two unidirectional rotation devices (30).

12. The multi-link rotation structure of claim 5, wherein each of the at least two linkage assemblies (40, 40a, 40b, 40c, 40d) further includes a weight (43), and the weights of the at least two linkage assemblies (40, 40a, 40b, 40c, 40d) shift toward a same direction relative to respective portions of the at least two linkage assemblies (40, 40a, 40b, 40c, 40d) rotatably mounted to the at least two unidirectional rotation devices (30).

13. The multi-link rotation structure of claim 6, wherein each of the at least two linkage assemblies (40, 40a, 40b, 40c, 40d) further includes a weight (43), and the weights of the at least two linkage assemblies (40, 40a, 40b, 40c, 40d) shift toward a same direction relative to respective portions of the at least two linkage assemblies (40, 40a, 40b, 40c, 40d) rotatably mounted to the at least two unidirectional rotation devices (30).

14. The multi-link rotation structure of claim 8, wherein each of the at least two linkage assemblies (40, 40a, 40b, 40c, 40d) further includes a weight (43), and the weights of the at least two linkage assemblies (40, 40a, 40b, 40c, 40d) shift toward a same direction relative to respective portions of the at least two linkage assemblies (40, 40a, 40b, 40c, 40d) rotatably mounted to the at least two unidirectional rotation devices (30).

15. The multi-link rotation structure of claim 9, wherein each of the at least two linkage assemblies (40, 40a, 40b, 40c, 40d) further includes a weight (43), and the weights of the at least two linkage assemblies (40, 40a, 40b, 40c, 40d) shift toward a same direction relative to respective portions of the at least two linkage assemblies (40, 40a, 40b, 40c, 40d) rotatably mounted to the at least two unidirectional rotation devices (30).

## Patentansprüche

1. Rotationsstruktur (1) mit Mehrfachverbindung, umfassend:
eine Basis (10);
eine erste und eine zweite Armanordnung (20, 20a, 20b), wobei jede der zwei Armanordnungen (20, 20a, 20b) eine Achse (21, 21b), die drehbar an der Basis (10) angebracht ist, und zumindest zwei Arme (22, 22a, 22b) umfasst, die mit der Achse verbunden sind (21, 21b) und sich voneinander weg erstrecken, wobei die Achsen (21, 21b) der beiden Armanordnungen (20, 20a, 20b) nicht-koaxial sind,
**dadurch gekennzeichnet, dass**
die Rotationsstruktur (1) mit Mehrfachverbindung ferner zumindest zwei unidirektionale Rotationsvorrichtungen (30) umfasst, die in dieselbe Richtung drehbar sind und von denen jede eine Rotationsachse hat,
wobei eine der zumindest zwei unidirektionalen Rotationsvorrichtungen (30) mit ihrer Achse drehbar an einem der zumindest zwei Arme (22,22a,22b) der ersten Armanordnung (20,20a,20b) angebracht ist und die andere der zwei unidirektionalen Rotationsvorrichtungen (30) mit ihrer Achse drehbar an dem anderen Arm (22,22a,22b) der ersten Armanordnung (20,20a,20b) angebracht ist,
zumindest zwei Verbindungsanordnungen (40, 40a, 40b, 40c, 40d), wobei eine der zumindest zwei Verbindungsanordnungen (40, 40a, 40b, 40c, 40d) drehbar an einem der zumindest zwei Arme (22, 22a, 22b) der zweiten Armanordnungen (20, 20a, 20b) angebracht ist und drehbar an einer der zumindest zwei unidirektionalen Rotationsvorrichtungen (30) angebracht ist und wobei die andere der zumindest zwei Verbindungsanordnungen (40,40a,40b,40c,40d) drehbar an dem anderen Arm (22,22a,22b) des zweiten Armanordnung (20,20a,20b) angebracht ist und drehbar an der anderen der zumindest zwei unidirektionalen Rotationsvorrichtungen (30) angebracht ist.

2. Rotationsstruktur mit Mehrfachverbindung nach Anspruch 1, bei welcher die Basis (10) zwei Säulen umfasst (12), die voneinander beabstandet sind, und jede der Achsen (21, 21b) der zwei Armanordnungen (20, 20a, 20b) ist drehbar an einer der zwei Säulen (12) angebracht.

3. Rotationsstruktur mit Mehrfachverbindung nach Anspruch 2, bei welcher die Achsen (21, 21b) der zwei Armanordnungen (20, 20a, 20b) in einer hoch-niedrig Weise arrangiert, sind

4. Rotationsstruktur mit Mehrfachverbindung nach Anspruch 2, bei welcher jede der Achsen (21, 21b) der zwei Armanordnungen (20, 20a, 20b) einen Achsenteil (211) und ein Lager (212) umfasst, das um den Achsenteil (211) angeordnet ist, und das Lager (212) ist an einer der beiden Säulen (12) befestigt.

5. Rotationsstruktur mit Mehrfachverbindung nach Anspruch 1, bei welcher jede der zwei Armanordnungen (20, 20a, 20b) zwei der Arme (22, 22a, 22b) umfasst, die sich entgegengesetzt zueinander unter einem Winkel von 180 Grad erstrecken, und die zwei Armanordnungen (20, 20a, 20b) sind parallel zueinander.

6. Rotationsstruktur mit Mehrfachverbindung nach Anspruch 1, bei welcher jede der zumindest zwei unidirektionalen Rotationsvorrichtungen (30) ein unidirektionales Lager (31), das drehbar an dem einem Arm (22, 22a, 22b) der ersten Armanordnung (20, 20a, 20b) angebracht ist, und ein Verbindungsstück (32) umfasst, das drehbar an dem unidirektionalen Lager (31) und einer der zumindest zwei Verbindungsanordnungen (40, 40a, 40b, 40c, 40d) angebracht ist, und bei der das unidirektionale Lager (31) und ein Abschnitt des Arms (22, 22a, 22b), der drehbar an der Verbindungsanordnung (40, 40a, 40b, 40c, 40d) angebracht ist, nicht-koaxial sind.

7. Rotationsstruktur mit Mehrfachverbindung nach Anspruch 1, bei welcher jede der Achsen (21, 21b) der zwei Armanordnungen (20, 20a, 20b) einen Kraftabgabeverbindungsmechanismus (213) umfasst, und der Kraftabgabeverbindungsmechanismus (213) für die externe Verbindung eines angetriebenen Geräts ist.

8. Rotationsstruktur mit Mehrfachverbindung nach Anspruch 1, bei welcher die zumindest zwei Arme (22, 22a, 22b) der ersten Armanordnung (20, 20a, 20b) integral miteinander verbunden sind und die zumindest zwei Arme (22, 22a, 22b) der zweiten Armanordnung (20, 20a, 20b) nicht integral miteinander verbunden sind und jeweils drehbar an der Achse (21, 21b) der zweiten Armanordnung (20, 20a, 20b) angebracht sind.

9. Rotationsstruktur mit Mehrfachverbindung nach Anspruch 1, bei welcher jede der zumindest zwei Verbindungsanordnungen (40, 40a, 40b, 40c, 40d) einen Verbindungsabschnitt (41, 41a, 41b, 41c, 41d) umfasst, der drehbar an dem einen Arm (22, 22a, 22b) einer der zwei Armanordnungen (20, 20a, 20b) angebracht ist und an einer der zumindest zwei unidirektionalen Rotationsvorrichtungen (30) drehbar angebracht ist und einen Ausdehnungsbereich (42, 42a, 42b, 42c, 42d) umfasst, der sich lateral von dem Verbindungsabschnitt (41, 41a, 41b, 41c, 41d) erstreckt, und bei welcher die Ausdehnungsbereiche (42, 42a, 42b, 42c, 42d) der zwei Armanordnungen (42, 42a, 42b, 42c, 42d) sich substantiell in dieselbe Richtung erstrecken.

10. Rotationsstruktur mit Mehrfachverbindung nach Anspruch 1, bei welcher jede der zumindest zwei Verbindungsanordnungen (40, 40a, 40b, 40c, 40d) ferner ein Gewicht (43) umfasst, und die Gewichte der zumindest zwei Verbindungsanordnungen (40, 40a, 40b, 40c, 40d) zu derselben Richtung relativ zu entsprechenden Abschnitten der zumindest zwei Verbindungsanordnungen (40, 40a, 40b, 40c, 40d) schieben, die drehbar an den zumindest zwei unidirektionalen Rotationsvorrichtungen (30) angebracht sind.

11. Rotationsstruktur mit Mehrfachverbindung nach Anspruch 3, bei welcher jede der zumindest zwei Verbindungsanordnungen (40, 40a, 40b, 40c, 40d) ferner ein Gewicht (43) umfasst, und die Gewichte der zumindest zwei Verbindungsanordnungen (40, 40a, 40b, 40c, 40d) zu derselben Richtung relativ zu entsprechenden Abschnitten der zumindest zwei Verbindungsanordnungen (40, 40a, 40b, 40c, 40d) schieben, die drehbar an den zumindest zwei unidirektionalen Rotationsvorrichtungen (30) angebracht sind.

12. Rotationsstruktur mit Mehrfachverbindung nach Anspruch 5, bei welcher jede der zumindest zwei Verbindungsanordnungen (40, 40a, 40b, 40c, 40d) ferner ein Gewicht (43) umfasst, und die Gewichte der zumindest zwei Verbindungsanordnungen (40, 40a, 40b, 40c, 40d) zu derselben Richtung relativ zu entsprechenden Abschnitten der zumindest zwei Verbindungsanordnungen (40, 40a, 40b, 40c, 40d) schieben, die drehbar an den zumindest zwei unidirektionalen Rotationsvorrichtungen (30) angebracht sind.

13. Rotationsstruktur mit Mehrfachverbindung nach Anspruch 6, bei welcher jede der zumindest zwei Verbindungsanordnungen (40, 40a, 40b, 40c, 40d) ferner ein Gewicht (43) umfasst, und die Gewichte der zumindest zwei Verbindungsanordnungen (40, 40a, 40b, 40c, 40d) zu derselben Richtung relativ zu entsprechenden Abschnitten der zumindest zwei Verbindungsanordnungen (40, 40a, 40b, 40c, 40d) schieben, die drehbar an den zumindest zwei unidirektionalen Rotationsvorrichtungen (30) angebracht sind.

14. Rotationsstruktur mit Mehrfachverbindung nach Anspruch 8, bei welcher jede der zumindest zwei Verbindungsanordnungen (40, 40a, 40b, 40c, 40d) ferner ein Gewicht (43) umfasst, und die Gewichte der zumindest zwei Verbindungsanordnungen (40, 40a, 40b, 40c, 40d) zu der selben Richtung relativ zu entsprechenden Abschnitten der zumindest zwei Verbindungsanordnungen (40, 40a, 40b, 40c, 40d) schieben, die drehbar an den zumindest zwei unidirektionalen Rotationsvorrichtungen (30) angebracht sind.

15. Rotationsstruktur mit Mehrfachverbindung nach Anspruch 9, bei welcher jede der zumindest zwei Verbindungsanordnungen (40, 40a, 40b, 40c, 40d) ferner ein Gewicht (43) umfasst, und die Gewichte der zumindest zwei Verbindungsanordnungen (40, 40a, 40b, 40c, 40d) zu derselben Richtung relativ zu entsprechenden Abschnitten der zumindest zwei Verbindungsanordnungen (40, 40a, 40b, 40c, 40d) schieben, die drehbar an den zumindest zwei unidirektionalen Rotationsvorrichtungen (30) angebracht sind.

## Revendications

1. Structure de rotation à liaisons multiples (1), incluant:
une base (10);
des premier et second ensembles de bras (20, 20a, 20b), chacun des deux ensembles de bras (20, 20a, 20b) incluant un axe (21, 21b) monté de façon rotative sur la base (10) et au moins deux bras (22, 22a, 22b) raccordés à l'axe (21, 21b) et s'étendant pour s'éloigner l'un de l'autre, les axes (21, 21b) des deux ensembles de bras (20, 20a, 20b) étant non coaxiaux;
**caractérisé en ce que**
la structure de rotation à liaisons multiples (1) inclut en outre au moins deux dispositifs de rotation unidirectionnels (30) rotatifs dans la même direction et
possédant chacun un axe de rotation,
dans laquelle l'un des au moins deux dispositifs de rotation unidirectionnels (30) est monté de façon rotative avec son axe sur l'un des au moins deux bras (22, 22a, 22b) du premier ensemble de bras (20, 20a, 20b) et l'autre des deux dispositifs de rotation unidirectionnels (30) est monté de façon rotative avec son axe sur l'autre bras (22, 22a, 22b) du premier ensemble de bras (20, 20a, 20b); au moins deux ensembles de tringlerie (40, 40a, 40b, 40c, 40d), dans laquelle l'un des au moins deux ensembles de tringlerie (40, 40a, 40b, 40c, 40d) est monté de façon rotative sur l'un des au moins deux bras (22, 22a, 22b) du second ensembles de bras (20, 20a, 20b) et monté de façon rotative sur l'un des au moins deux dispositifs de rotation unidirectionnels (30), et dans laquelle l'autre des au moins deux ensembles de tringlerie (40, 40a, 40b, 40c, 40d) est monté de façon rotative sur l'autre bras (22, 22a, 22b) du second ensemble de bras (20, 20a, 20b) et monté de façon rotative sur l'autre des au moins deux dispositifs de rotation unidirectionnels (30).

2. Structure de rotation à liaisons multiples selon la revendication 1, dans laquelle la base (10) inclut deux montants (12) espacés l'un de l'autre, et chacun des axes (21, 21b) des deux ensembles de bras (20, 20a, 20b) est monté de façon rotative sur l'un des deux montants (12).

3. Structure de rotation à liaisons multiples selon la revendication 2, dans laquelle les axes (21, 21b) des deux ensembles de bras (20, 20a, 20b) sont agencés de manière haute-basse.

4. Structure de rotation à liaisons multiples selon la revendication 2, dans laquelle chacun des axes (21, 21b) des deux ensembles de bras (20, 20a, 20b) inclut une partie d'axe (211) et un palier (212) disposé autour de la partie d'axe (211), et le palier (212) est fixé à l'un des deux montants (12).

5. Structure de rotation à liaisons multiples selon la revendication 1, dans laquelle chacun des deux ensembles de bras (20, 20a, 20b) inclut deux des bras (22, 22a, 22b) s'étendant de façon opposée, à un angle de 180 degrés, et les deux ensembles de bras (20, 20a, 20b) sont parallèles l'un à l'autre.

6. Structure de rotation à liaisons multiples selon la revendication 1, dans laquelle chacun des au moins deux dispositifs de rotation unidirectionnels (30) inclut un palier unidirectionnel (31) qui est monté de façon rotative sur l'un dit bras (22, 22a, 22b) du premier ensemble de bras (20, 20a, 20b) et un élément de raccordement (32) qui est monté de façon rotative sur le palier unidirectionnel (31) et l'un des au moins deux ensembles de tringlerie (40, 40a, 40b, 40c, 40d), et le palier unidirectionnel (31) et une portion du bras (22, 22a, 22b) montée de façon rotative avec l'ensemble de tringlerie (40, 40a, 40b, 40c, 40d) sont non coaxiaux.

7. Structure de rotation à liaisons multiples selon la revendication 1, dans laquelle chacun des axes (21, 21b) des deux ensembles de bras (20, 20a, 20b) inclut un mécanisme de raccordement de sortie de puissance (213), et le mécanisme de raccordement de sortie de puissance (213) est pour le raccordement externe d'un dispositif d'entraînement.

8. Structure de rotation à liaisons multiples selon la revendication 1, dans laquelle les au moins deux bras (22, 22a, 22b) du premier ensemble de bras (20, 20a, 20b) sont raccordés ensemble de façon monobloc, et les au moins deux bras (22, 22a, 22b) du second ensemble de bras (20, 20a, 20b) ne sont pas raccordés ensemble de façon monobloc et respectivement montés de façon rotative sur l'axe (21, 21b) du second ensemble de bras (20, 20a, 20b).

9. Structure de rotation à liaisons multiples selon la revendication 1, dans laquelle chacun des au moins deux ensembles de tringlerie (40, 40a, 40b, 40c, 40d) inclut une section de tringlerie (41, 41a, 41b, 41c, 41d) qui est montée de façon rotative sur l'un dit bras (22, 22a, 22b) de l'un des deux ensembles de bras (20, 20a, 20b) et monté de façon rotative sur l'un des au moins deux dispositifs de rotation unidirectionnels (30) et inclut une section d'extension (42, 42a, 42b, 42c, 42d) s'étendant latéralement à partir de la section de tringlerie (41, 41a, 41b, 41c, 41d), et les sections d'extensions (42, 42a, 42b, 42c, 42d) des deux ensembles de bras (42, 42a, 42b, 42c, 42d) s'étendent sensiblement vers une même direction.

10. Structure de rotation à liaisons multiples selon la revendication 1, dans laquelle chacun des au moins deux ensembles de tringlerie (40, 40a, 40b, 40c, 40d) inclut en outre un poids (43), et les poids des au moins deux ensembles de tringlerie (40, 40a, 40b, 40c, 40d) se déplacent vers une même direction par rapport à des portions respectives des au moins deux ensembles de tringlerie (40, 40a, 40b, 40c, 40d) montés de façon rotative sur les au moins deux dispositifs de rotation unidirectionnels (30).

11. Structure de rotation à liaisons multiples selon la revendication 3, dans laquelle chacun des au moins deux ensembles de tringlerie (40, 40a, 40b, 40c, 40d) inclut en outre un poids (43), et les poids des au moins deux ensembles de tringlerie (40, 40a, 40b, 40c, 40d) se déplacent vers une même direction par rapport à des portions respectives des au moins deux ensembles de tringlerie (40, 40a, 40b, 40c, 40d) montés de façon rotative sur les au moins deux dispositifs de rotation unidirectionnels (30).

12. Structure de rotation à liaisons multiples selon la revendication 5, dans laquelle chacun des au moins deux ensembles de tringlerie (40, 40a, 40b, 40c, 40d) inclut en outre un poids (43), et les poids des au moins deux ensembles de tringlerie (40, 40a, 40b, 400, 40d) se déplacent vers une même direction par rapport à des portions respectives des au moins deux ensembles de tringlerie (40, 40a, 40b, 40c, 40d) montés de façon rotative sur les au moins deux dispositifs de rotation unidirectionnels (30).

13. Structure de rotation à liaisons multiples selon la revendication 6, dans laquelle chacun des au moins deux ensembles de tringlerie (40, 40a, 40b, 40c, 40d) inclut en outre un poids (43), et les poids des au moins deux ensembles de tringlerie (40, 40a, 40b, 40c, 40d) se déplacent vers une même direction par rapport à des portions respectives des au moins deux ensembles de tringlerie (40, 40a, 40b, 40c, 40d) montés de façon rotative sur les au moins deux dispositifs de rotation unidirectionnels (30).

14. Structure de rotation à liaisons multiples selon la revendication 8, dans laquelle chacun des au moins deux ensembles de tringlerie (40, 40a, 40b, 40c, 40d) inclut en outre un poids (43), et les poids des au moins deux ensembles de tringlerie (40, 40a, 40b, 40c, 40d) se déplacent vers une même direction par rapport à des portions respectives des au moins deux ensembles de tringlerie (40, 40a, 40b, 40c, 40d) montés de façon rotative sur les au moins deux dispositifs de rotation unidirectionnels (30).

15. Structure de rotation à liaisons multiples selon la revendication 9, dans laquelle chacun des au moins deux ensembles de tringlerie (40, 40a, 40b, 40c, 40d) inclut en outre un poids (43), et les poids des au moins deux ensembles de tringlerie (40, 40a, 40b, 40e, 40d) se déplacent vers une même direction par rapport à des portions respectives des au moins deux ensembles de tringlerie (40, 40a, 40b, 40c, 40d) montés de façon rotative sur les au moins deux dispositifs de rotation unidirectionnels (30).
